Europäisches Patentamt

European Patent Office

Office européen des brevets

(11) Veröffentlichungsnummer: **0 112 997**
**B1**

(12) **EUROPÄISCHE PATENTSCHRIFT**

(45) Veröffentlichungstag der Patentschrift: **02.03.88**

(51) Int. Cl.⁴: **B 60 T 13/14,** B 60 T 11/20

(21) Anmeldenummer: **83110936.8**

(22) Anmeldetag: **03.11.83**

(54) Hydraulischer Zweikreis-Bremsverstärker.

(30) Priorität: **02.12.82 DE 3244560**

(43) Veröffentlichungstag der Anmeldung:
**11.07.84 Patentblatt 84/28**

(45) Bekanntmachung des Hinweises auf die
Patenterteilung:
**02.03.88 Patentblatt 88/09**

(84) Benannte Vertragsstaaten:
**AT DE FR GB IT SE**

(56) Entgegenhaltungen:
**DE-A-2 503 870**
**FR-A-2 318 060**
**FR-A-2 404 552**
**FR-A-2 434 063**
**GB-A-2 049 851**
**GB-A-2 084 676**
**GB-A-2 086 509**
**US-A-3 926 480**

(73) Patentinhaber: **ROBERT BOSCH GMBH**
**Postfach 50**
**D-7000 Stuttgart 1 (DE)**

(72) Erfinder: **Leiber, Heinz**
**Theodor-Heuss-Strasse 34**
**D-7141 Oberriexingen (DE)**

Courier Press, Leamington Spa, England.

## Beschreibung

Die Erfindung geht aus von einem hydraulischen Zweikreis-Bremsverstärker nach der Gattung des Hauptanspruchs.

Ein derartiger Bremsverstärker ist bekannt (FR—A—24 34 063). Bei diesem bekannten Bremsverstärker sind zwei geschlossene Bremskreise verwendet. Die Pedalstößellagerung ist so ausgebildet, daß bei Ausfall der Druckversorgung ein größerer Weg des Pedalstößels möglich ist. Die Bremsverstärkung ist dann aber nicht mehr wirksam.

Der hydraulische Zweikreis-Bremsverstärker mit den kennzeichnenden Merkmalen des Hauptanspruchs hat demgegenüber den Vorteil, daß bei Ausfall eines Bremskreises die Druckversorgung intakt bleibt und mit dem anderen Bremskreis noch mit voller Verstärkung gebremst werden kann.

Durch die Lagerung des Pedalstößels in dem verschiebbaren Kolben, der vom eingesteuerten Bremsdruck beaufschlagt ist, läßt sich nach voller Aussteuerung des Bremsverstärkers ein stark progressiver Kraftanstieg erreichen, was an einem Hartwerden des Pedals zu erkennen ist. Eine solche Pedalcharakteristik ist erwünscht.

Bei einem System mit zwei geschlossenen Bremskreisen wird ein Defekt der Manschette des ersten Kolbens durch entsprechende Bewegung des dahinterliegenden Kolbens erkannt, da Druckmittel aus dem geschlossenen Bremskreis über die defekte Manschette abfließt. Ein Defekt der Primärmanschette des hinteren Kolbens ist nicht sicherheitsrelevant, da bei Ausfall der Druckversorgung über den Pedalstößel die volle Bremswirkung in beiden Bremskreisen sichergestellt ist.

Eine Ausbildung des Hauptbremszylinders als Stufenhauptbremszylinder bringt Vorteile für den Fall des Ausfalls von Bremskreis II. In diesem Fall wirkt eine Druckübersetzung infolge der unterschiedlichen Kolbenflächen, so daß trotz ausgefallenem Bremskreis nahezu dieselbe Zuordnung von Pedalkraft zur Fahrzeugverzögerung erreicht wird. Bei konventioneller Bremskreisaufteilung empfiehlt es sich, den Bremskreis I der Hinterachse zuzuordnen, da insbesondere im beladenen Fahrzeug sehr hohe Bremsdrücke für die Hinterachse notwendig werden. Auch hier ist die Druckübersetzung vorteilhaft.

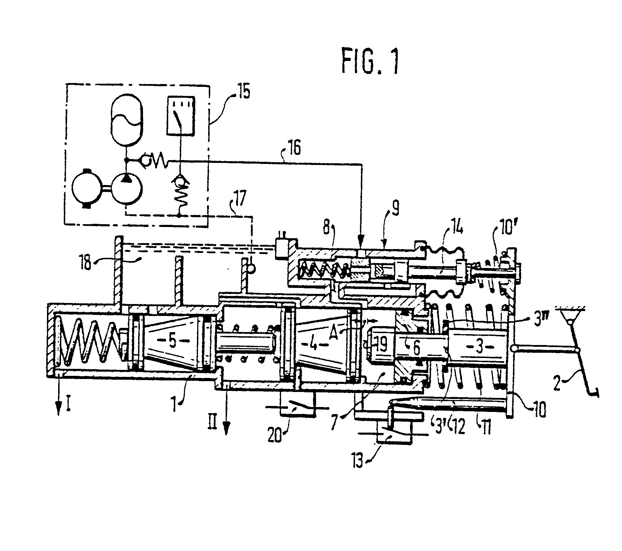

Ein Ausführungsbeispiel der Erfindung ist in der Zeichnung dargestellt und in der nachfolgenden Beschreibung näher erläutert.

Ein Bremsverstärker hat einen Zweikreis-Tandem-Hauptzylinder 1, zu dem ein über ein Bremspedal 2 betätigter Pedalstößel 3 gleichachsig angeordnet ist. Der Tandem-Hauptzylinder 1 ist als Stufenhauptzylinder ausgebildet, er kann aber auch eine durchgehend gleichgroße Bohrung für zwei Hauptzylinderkolben 4 und 5 haben.

Der Pedalstößel 3 ist in einem verschiebbaren, am pedalseitigen Ende des Tandem-Hauptzylinders 1 angeordneten Kolben 6 gelagert, dessen Innenfläche eine Kammer 7 begrenzt, die über einen Kanal 8 an ein Steuerventil 9 des Bremsverstärkers angeschlossen ist. Der Pedalstößel 3 hat eine Schulter 3', über die der Kolben 6 den Pedalstößel 3 zurückdrücken kann. Diese Schulter 3' ist noch mit einer Gummischeibe 3'' abgefedert. Das Steuerventil 9 liegt außerhalb der Achse des Tandem-Hauptzylinders 1 und zwar achsparallel zu diesem.

Der Pedalstößel 3 trägt eine Platte 10, die mittels einer Feder 11 gegenüber dem Tandem-Hauptzylinder 1 abgestützt ist. An der Platte 10 ist einerseits ein Stift 12 befestigt, der mit einem Schalter 13 als Stellungsüberwachungsschalter zusammenarbeitet. Andererseits trägt die Platte 10 einen über eine Wegfeder 10' federnd abgestützten Schieber 14 des Steuerventils 9.

An das Steuerventil 9 ist eine Druckquelle 15 angeschlossen, die zumindest einen Motor, eine Pumpe und einen Speicher aufweist. Außerdem sind eine Druckleitung 16 und eine Saugleitung 17 dargestellt. Letztere ist von einem Nachfüllbehälter 18 herangeführt, der als Dreikammerbehälter mit entsprechenden Verbindungskanälen zum Tandem-Hauptzylinder 1 ausgebildet ist.

Es ist noch zu bemerken, daß in der dargestellten Ausgangslage des Pedalstößels 3 ein inneres Ende 19 desselben einen geringen Abstand "A" von dem ersten Kolben 4 des hydraulischen Tandem-Hauptzylinders 1 hat. Außerdem ist auch hoch am Tandem-Hauptzylinder 1 mindestens ein weiterer Stellungs-Überwachungsschalter 20 vorgesehen.

## Wirkungsweise

Wird das Pedal 2 betätigt, so werden über den Pedalstößel 3 die Platte 10 und über die Wegfeder 10' der Schieber 14 des Steuerventils 9 verschoben. Nach Absperren des Rücklaufs wird eine Verbindung der Druckleitung 16 mit der Kammer 7 hergestellt. Der eingesteuerte Druck wirkt einerseits auf den Pedalstößel 3 zurück, andererseits schiebt er die beiden Hauptzylinder-Kolben 4 und 5 im Bremssinn nach links. In den beiden geschlossenen Bremskreisen I und II wird Druck aufgebaut. Nach dem Öffnen des Zulaufs ist in der Kammer 7 der Abstand "A" überwunden, und das Ende 19 des Pedalstößels 3 legt sich am Hauptzylinder-Kolben 4 an. Das hat den Vorteil, daß bei Ausfall der Druckversorgung ein möglichst großer Pedalweg zur Druckerzeugung zur Verfügung steht.

Wenn der Bremsverstärker voll ausgesteuert ist, legt sich der Kolben 6 an die Pedalstößel-Schulter 3' an, so daß das Pedal 2 sehr hart wird. Das ist erwünscht, um den Fahrer ein Gefühl für die aufgewendete volle Bremskraft zu geben (stark progressiver Kraftanstieg). Durch Verwendung der Gummischeibe 3'' wird der Übergang zum "harten" Pedal optimiert.

## Patentansprüche

1. Hydraulischer Zweikreis-Bremsverstärker für Fahrzeugbremsanlagen, der über einen pedalbewegten Stößel (3) betätigt wird und dem ein hydraulischer Hauptzylinder (1) nachgeordnet ist, der als Zweikreis-Tandem-Hauptzylinder mit zwei geschlossenen Bremskreisen (I, II) ausgebildet ist, mit einem vom Pedal (2) geschalteten und mit einem Wegsimulator (10, 12, 13) ausgerüsteten Steuerventil (9) zur Einsteuerung des Druckes einer Druckquelle in den Bremsverstärker, wobei ein bei intakter Druckversorgung an einem Anschlag festliegender, bei Ausfall der Druckversorgung jedoch verschiebbarer Zwischenkolben (6) vorgesehen ist, dessen Innenwirkfläche dem vom Steuerventil (9) eingesteuerten Druck unterliegt, under Pedalstößel (3) und der Tandem-Hauptzylinder (1) zumindest nahezu gleichachsig hintereinander angeordnet sind, dadurch gekennzeichnet, daß der Pedalstößel (3) konzentrisch im Zwischenkolben (6) gelagert ist und eine Schulter (3') hat, die bei Ausfall der Druckversorgung zur Zusammenarbeit mit der äußeren Fläche des Zwischenkolbens (6) bestimmt ist.

2. Bremsverstärker nach Anspruch 1, dadurch gekennzeichnet, daß der Zweikreis-Tandem-Hauptzylinder (1) als Stufen-Hauptzylinder ausgebildet ist.

**Revendications**

1. Amplificateur de freinage hydraulique à double circuit pour des installations de freinage de véhicules qui est actionné par une tige (3), mue par une pédale et à laquelle est associé un maître-cylindre hydraulique (1) qui est constitué de deux circuits fermés de freinage tandem (I, II) comportant une soupape de commande (9) branchée et munie d'un simulateur de course (10, 12, 13) pour l'introduction de la pression dans l'amplificateur de freinage, dans lequel est prévu un piston intermédiaire (6), fixé solidement sur une butée par une alimentation en pression intacte, coulissant cepedant par sortie de l'alimentation en pression dont la surface active intérieure provoque la pression introduite à partir de la soupape de commande et la tige de pédale (3) et le maître-cylindre-tandem (1) sont disposés au moins à peu près coaxialement l'un derrière l'autre, caractérisé en ce que la tige de pédale (3) est supportée concentriquement sur le piston intermédiaire (6) et comporte un épaulement (3') qui lors d'une déficience de l'alimentation en pression est conçue pour coopérer avec la surface extérieure du piston intermédiaire (6).

2. Amplificateur de freinage selon la revendication 1, caractérisé en ce que le maître-cylindre-tandem (1) est sous la forme d'un maître-cylindre étagé.

**Claims**

1. Hydraulic dual-circuit brake energizer for vehicle brake installations, which is actuated through a pedal-moved push rod (3) and which is followed by a hydraulic master cylinder (1) which is constructed as a dual-circuit tandem master cylinder with two closed brake circuits (I, II), with a control valve (9) switched by the pedal (2) and equipped with a stroke simulator (10, 12, 13) to control the pressure of a pressure source into the brake energizer, whilst an intermediate piston (6) is provided which is stationary against a stop in the case of an intact pressure supply, but slidable in the case of failure of the pressure supply, and the interior active surface of which is exposed to the pressure controlled by the control valve (9), and the pedal push rod (3) and the tandem master cylinder (1) are arranged at least approximately coaxially consecutively, characterized in that the pedal push rod (3) is mounted concentrically in the intermediate piston (6) and has a shoulder (3') which is intended for cooperation with the exterior surface of the intermediate piston (6) in the event of failure of the pressure supply.

2. Brake energizer according to Claim 1, characterized in that the dual-circuit tandem master cylinder (1) is constructed as a stepped master cylinder.

# FIG. 1